# EUROPEAN PATENT APPLICATION

(11) **EP 4 238 424 A1**
(43) Date of publication of application: **06.09.2023**
(21) Application number: 21886116.9
(22) Date of filing: 25.10.2021
(51) Int. Cl.: A23L 2/00

(54) **NON-ALCOHOLIC BEER-FLAVORED BEVERAGE**

(30) Priority: 29.10.2020 JP 2020181593
(71) Applicant: Suntory Holdings Limited, Osaka 530-8203 (JP)
(72) Inventor: SHIMMURA, Anna, Fuchu-shi, Tokyo 183-8533 (JP); KATO, Yuichi, Fuchu-shi, Tokyo 183-8533 (JP)
(74) Representative: Vossius & Partner Patentanwälte Rechtsanwälte mbB
(86) International application number: PCT/JP2021/039223
(87) International publication number: WO 2022/091998

(57) **Abstract**

A non-alcoholic beer-taste beverage comprising 1,4-cineole, in which the content of 1,4-cineole (Y) is 1400 ppb by mass or less.

## Description

### Technical Field

The present invention relates to a non-alcoholic beer-taste beverage.

### Background Art

Non-alcoholic beer-taste beverages that are carbonated beverages having a beer flavor and having an alcohol percentage of less than 1 (v/v)% have been distributed to the market as beer-taste beverages produced using water and malts as some raw materials. Regarding such non-alcoholic beer-taste beverages, various developments have been made.

For example, Patent Literature 1 discloses a technique regarding a method for producing a non-alcoholic fermented beverage, in which α-glucosidase is added before a fermentation step in the production of a beer, so that the concentration of alcohol generated can be reduced by about 40% to 55%, compared with conventional methods.

### Citation List

### Patent Literature

Patent Literature 1: Patent Publication (Kokai) No. 5-68528 A (1993)

### Summary of Invention

### Technical Problem

In a common non-alcoholic beer-taste beverage produced by the method described in Patent Literature 1, the feeling of a beverage going down the throat, which is suitable for a beer beverage, becomes insufficient in many cases, when compared with ordinary beers. Thus, it has been desired to develop a non-alcoholic beer-taste beverage that provides an improved feeling of a beverage going down the throat. In addition, it has also been desired to develop a non-alcoholic beer-taste beverage having not only an improved feeling of a beverage going down the throat, but also the satisfying quality of a beverage, which is suitable for a beer-taste beverage.

### Solution to Problem

The present invention provides a non-alcoholic beer-taste beverage containing 1,4-cineole, in which the content of 1,4-cineole (Y) is 1400 ppb by mass or less. Specifically, the present invention includes the inventions with the following embodiments.
[1] A non-alcoholic beer-taste beverage comprising 1,4-cineole, in which the content of 1,4-cineole (Y) is 1400 ppb by mass or less.
[2] The non-alcoholic beer-taste beverage according to the above [1], further comprising isoamyl propionate.
[3] The non-alcoholic beer-taste beverage according to the above [2], wherein the content of isoamyl propionate (X) is 1900 ppb by mass or less.
[4] The non-alcoholic beer-taste beverage according to the above [2] or [3], wherein the ratio [(X)/(Y)] between the content of 1,4-cineole (Y) (unit: ppb by mass) and the content of isoamyl propionate (X) (unit: ppb by mass) is 0.0007 to 1200.
[5] The non-alcoholic beer-taste beverage according to any one of the above [1] to [4], wherein the content of 1,8-cineole is 100 ppb by mass or less.
[6] The non-alcoholic beer-taste beverage according to any one of the above [1] to [5], which does not substantially comprise 1,8-cineole.
[7] The non-alcoholic beer-taste beverage according to any one of the above [1] to [6], wherein the alcohol percentage in the non-alcoholic beer-taste beverage is less than 1.0 (v/v)%.
[8] The non-alcoholic beer-taste beverage according to any one of the above [1] to [7], wherein the carbon dioxide gas pressure in the non-alcoholic beer-taste beverage is 5.0 kg/cm² or less.
[9] The non-alcoholic beer-taste beverage according to any one of the above [1] to [8], which is a non-fermented beverage.

### Advantageous Effects of Invention

The non-alcoholic beer-taste beverage according to one preferred embodiment of the present invention can be a beverage, in which both a favorable feeling of a beverage going down the throat and the satisfying quality of a beverage are improved with good balance.

### Description of Embodiments

### 1. Non-alcoholic beer-taste beverage

In the present invention, the "non-alcoholic beer-taste beverage" means a carbonated beverage having a beer-like flavor, which does not belong to "alcohols" defined in the Notification of the Interpretation of the Liquor Tax Law and Other Laws and Orders relating to the Administration of Liquor Affairs (date of enforcement: April 1, 2018).

The alcohol percentage in the non-alcoholic beer-taste beverage according to one embodiment of the present invention may be less than 1 (v/v%). The alcohol percentage is preferably less than 0.8 (v/v)%, more preferably less than 0.6 (v/v)%, even more preferably less than 0.5 (v/v)%, further preferably less than 0.4 (v/v)%, still further preferably less than 0.2 (v/v)%, still further preferably less than 0.1 (v/v)% still further preferably less than 0.1 (v/v)%, still further preferably less than 0.05 (v/v)%, still further preferably less than 0.01 (v/v)%, and still further preferably less than 0.005 (v/v)%.

Besides, in the present description, the alcohol percentage is indicated with the percentage (v/v%) of volume/volume basis. In addition, the content of alcohol in a beverage can be measured by all of known methods, and it can be measured, for example, by gas chromatography.

The non-alcoholic beer-taste beverage according to one embodiment of the present invention may be a fermented beverage, which is obtained by removing alcohol generated in a fermentation step performed using a yeast (a top fermentation yeast or a bottom fermentation yeast) in a production process thereof, or may also be a non-fermented beverage prepared without being subjected to such a fermentation step.

When the non-alcoholic beer-taste beverage according to one embodiment of the present invention is a non-fermented beverage, a carbonated beverage that is adjusted to have a beer-like flavor by addition of a beer flavor including esters or higher alcohols (for example, isoamyl acetate, ethyl acetate, n-propanol, isobutanol, acetaldehyde, ethyl caproate, ethyl caprylate, linalool, geraniol, citral, 4-vinylguaiacol (4-VG), 4-methyl-3-pentenoic acid, 2-methyl-2-pentenoic acid, 2,3-diethyl-5-methylpyrazine, γ-decanolactone, γ-undecalactone, ethyl hexanoate, ethyl 2-methylbutyrate, ethyl n-butyrate, myrcene, etc.) in order to impart a beer flavor to the beverage, is also included in the non-fermented non-alcoholic beer-taste beverage according to one embodiment of the present invention.

In addition, the non-alcoholic beer-taste beverage according to one embodiment of the present invention may be either a non-alcoholic beer-taste beverage comprising a malt, in which a malt is used as a raw material, or a non-alcoholic beer-taste beverage not comprising a malt, in which a malt is not used as a raw material. A non-alcoholic beer-taste beverage comprising a malt is preferable, and a non-alcoholic beer-taste beverage comprising a barley malt is more preferable.

Since such a common non-alcoholic beer-taste beverage has a low alcohol percentage, the feeling of a beverage going down the throat easily becomes insufficient. With respect to such a problem, the present inventors have found that a non-alcoholic beer-taste beverage comprising 1,4-cineole is able to improve, with good balance, both a favorable feeling of a beverage going down the throat, which is suitable for a beer beverage, and a satisfying quality of a beverage, when compared with conventional non-alcoholic beer-taste beverages. The present invention has been completed based on such findings.

It is adequate if the non-alcoholic beer-taste beverage according to one embodiment of the present invention may comprise 1,4-cineole. However, from the viewpoint of achieving a beverage, in which both a favorable feeling of a beverage going down the throat, which is suitable for a beer-taste beverage, and a satisfying quality of a beverage can be improved with good balance, the content of 1,4-cineole (Y) is preferably 0.2 ppb by mass or more, more preferably 0.5 ppb by mass or more, even more preferably 0.7 ppb by mass or more, further preferably 1.0 ppb by mass or more, still further preferably 1.3 ppb by mass or more, still further preferably 1.5 ppb by mass or more, still further preferably 1.8 ppb by mass or more, and particularly preferably 2.0 ppb by mass or more, based on the total amount (100% by mass) of the above-described non-alcoholic beer-taste beverage. Further, the content of 1,4-cineole (Y) may also be set to be 3 ppb by mass or more, 5 ppb by mass or more, 7 ppb by mass or more, 10 ppb by mass or more, 50 ppb by mass or more, 100 ppb by mass or more, 150 ppb by mass or more, 200 ppb by mass or more, 250 ppb by mass or more, 300 ppb by mass or more, 320 ppb by mass or more, 350 ppb by mass or more, or 380 ppb by mass or more.

On the other hand, from the viewpoint of suppressing a bitterness as an unsuitable aftertaste of a beer-taste beverage, the content of 1,4-cineole (Y), the content of 1,4-cineole (Y) in the non-alcoholic beer-taste beverage according to one embodiment of the present invention is 1400 ppb by mass or less, preferably 1300 ppb by mass or less, more preferably 1200 ppb by mass or less, even more preferably 1100 ppb by mass or less, further preferably 1050 ppb by mass or less, still further preferably 1000 ppb by mass or less, still further preferably 900 ppb by mass or less, particularly preferably 800 ppb by mass or less, and further particularly preferably 700 ppb by mass or less, based on the total amount (100% by mass) of the above-described non-alcoholic beer-taste beverage. Further, the content of 1,4-cineole (Y) may also be set to be 600 ppb by mass or less, 500 ppb by mass or less, 400 ppb by mass or less, 350 ppb by mass or less, 300 ppb by mass or less, 250 ppb by mass or less, 200 ppb by mass or less, 150 ppb by mass or less, or 100 ppb by mass or less.

It is preferable that the non-alcoholic beer-taste beverage according to one embodiment of the present invention further comprises isoamyl propionate. By allowing the present non-alcoholic beer-taste beverage to comprise isoamyl propionate together with 1,4-cineole, a non-alcoholic beer-taste beverage, in which a favorable feeling of a beverage going down the throat, which is suitable for a beer-taste beverage, is further improved, can be provided.

From the viewpoint of achieving a beverage, in which a favorable feeling of a beverage going down the throat, which is suitable for a beer-taste beverage, is further improved, the content of isoamyl propionate (X) in the non-alcoholic beer-taste beverage according to one embodiment of the present invention is preferably 1.0 ppb by mass or more, more preferably 3.0 ppb by mass or more, further preferably 5.0 ppb by mass, still further preferably 7.0 ppb by mass or more, and particularly preferably 10 ppb by mass or more, based on the total amount (100% by mass) of the above-described non-alcoholic beer-taste beverage. Further, the content of isoamyl propionate (X) may also be set to be 15 ppb by mass or more, 20 ppb by mass or more, 30 ppb by mass or more, 40 ppb by mass or more, 55 ppb by mass or more, 70 ppb by mass or more, 100 ppb by mass or more, 120 ppb by mass or more, 150 ppb by mass or more, 180 ppb by mass or more, 200 ppb by mass or more, 220 ppb by mass or more, 250 ppb by mass or more, 280 ppb by mass or more, 300 ppb by mass or more, 320 ppb by mass or more, 350 ppb by mass or more, or 380 ppb by mass or more.

On the other hand, from the viewpoint of suppressing a bitterness as an unsuitable aftertaste of a beer-taste beverage, the content of isoamyl propionate (X) is preferably 1900 ppb by mass or less, more preferably 1800 ppb by mass or less, even more preferably 1700 ppb by mass or less, further preferably 1600 ppb by mass or less, still further preferably 1400 ppb by mass or less, still further preferably 1300 ppb by mass or less, still further preferably 1200 ppb by mass or less, particularly preferably 1100 ppb by mass or less, and further particularly preferably 1000 ppb by mass or less, based on the total amount (100% by mass) of the above-described non-alcoholic beer-taste beverage. Further, the content of isoamyl propionate (X) may also be set to be 900 ppb by mass or less, 850 ppb by mass or less, 800 ppb by mass or less, 750 ppb by mass or less, 700 ppb by mass or less, 650 ppb by mass or less, 600 ppb by mass or less, 550 ppb by mass or less, or 500 ppb by mass or less.

In the non-alcoholic beer-taste beverage according to one embodiment of the present invention, from the viewpoint of imparting to a beverage, both a favorable feeling of a beverage going down the throat, which is suitable for a beer-taste beverage, and a satisfying quality of a beverage, which is suitable for a beer-taste beverage, and providing a beverage in which a bitterness as an unsuitable aftertaste of a beer-taste beverage is suppressed, the ratio [(X)/(Y)] between the content of isoamyl propionate (X) (unit: ppb by mass) and the content of 1,4-cineole (Y) (unit: ppb by mass) is preferably 0.0007 or more, more preferably 0.0008 or more, even more preferably 0.001 or more, further preferably 0.005 or more, still further preferably 0.01 or more, particularly preferably 0.05 or more, and further particularly preferably 0.1 or more. The ratio [(X)/(Y)] may also be set to be 0.3 or more, 0.5 or more, 0.7 or more, 1.0 or more, 3.0 or more, 5.0 or more, 7.0 or more, 9.0 or more, 11.0 or more, or 13.0 or more. On the other hand, the ratio [(X)/(Y)] is preferably 1200 or less, more preferably 1000 or less, further preferably 800 or less, still further preferably 700 or less, particularly preferably 600 or less, and further particularly preferably 500 or less. Further, the ratio [(X)/(Y)] may also be set to be 450 or less, 400 or less, 350 or less, 300 or less, 250 or less, 200 or less, 150 or less, 100 or less, 80 or less, 60 or less, or 40 or less.

From the viewpoint of achieving a beverage that realizes a taste suitable for a beer-taste beverage, the content of 1,8-cineole in the non-alcoholic beer-taste beverage according to one embodiment of the present invention is preferably 100 ppb by mass or less, more preferably 70 ppb by mass or less, further preferably 50 ppb by mass or less, still further preferably 30 ppb by mass or less, particularly preferably 10 ppb by mass or less, based on the total amount (100% by mass) of the above-described non-alcoholic beer-taste beverage, and further particularly preferably, the present non-alcoholic beer-taste beverage does not substantially comprise 1,8-cineole.

The phrase "not substantially comprise 1,8-cineole" is a regulation that denies an aspect of allowing a beverage to comprise 1,8-cineole for a certain purpose. Thus, it is not a regulation that denies an aspect in which a beverage unintentionally or unavoidably comprises 1,8-cineole. However, the content of 1,8-cineole in a case where it is regulated that a beverage "does not substantially comprise 1,8-cineole" is preferably as small as possible. Specifically, in such a case, the content of 1,8-cineole is 1.0 ppb by mass or less, preferably 0.5 ppb by mass or less, more preferably 0.3 ppb by mass or less, further preferably 0.2 ppb by mass or less, and particularly preferably 0.1 ppb by mass or less.

The content of 1,4-cineole (Y), the content of isoamyl propionate (X), and the content of 1,8-cineole can be adjusted by determining, as appropriate, addition of a diluting solution or carbonated water, addition of a flavor containing these components, the amounts of raw materials containing these components, the types of raw materials containing these components, the amounts of the raw materials, the types of raw materials, the concentration of the original extract of a wort, etc.

Besides, in the present description, the content of 1,4-cineole (Y), the content of isoamyl propionate (X), and the content of 1,8-cineole can be measured by gas chromatography-mass spectrometry (GC/MS). An example of a specific measurement method may be a method of measuring the contents of the aforementioned components using the following sample, under the following measurement conditions.

### [Sample]

A solution is prepared by adding 30 to 50 mL of dichloromethane to 10 to 20 g of a beverage used as a measurement subject. Thereafter, a dichloromethane layer of the prepared solution is concentrated under reduced pressure, and 1 µL of the concentrate is then poured in the following GC/MS device, followed by performing a measurement.

### [Measurement conditions]

- GC/MS device: 7890B/5977B (manufactured by Agilent Technologies)
- Column: DB-WAX (manufactured by Agilent Technologies), diameter: 0.25 mm x 30 m, film thickness: 0.25 µm
- Introduction system: Split 5 : 1
- Amount injected: 1 µL
- Temperature of sample injection port: 220°C
- Column temperature: 40°C (retention for 1 minute) → temperature increase up to 160°C at a rate of 10°C/minute → temperature increase up to 200°C at a rate of 15°C/minute
- Gas flow rate: Helium (carrier gas) at a rate of 1 mL/minute
- Ion source temperature: 230°C
- Ionization method: El

The pH of the non-alcoholic beer-taste beverage according to one embodiment of the present invention is not particularly limited, and it is preferably less than pH 4.0, more preferably less than pH 3.9, even more preferably less than pH 3.7, further preferably less than pH 3.5, and still further preferably less than pH 3.3. On the other hand, from the viewpoint of suppressing generation of microorganisms and achieving a beverage with an improved flavor, the pH of the non-alcoholic beer-taste beverage according to one embodiment of the present invention is preferably pH 2.0 or more, more preferably pH 2.2 or more, even more preferably less than pH 2.4, further preferably less than pH 2.6, and still further preferably less than pH 2.8.

The pH can be adjusted by determining, as appropriate, addition of a dilution solution or carbonated water, the types of raw materials (malts, corn grits, a sugar solution, hops, etc.), the amounts of acidulants (lactic acid, phosphoric acid, malic acid, tartaric acid, citric acid, etc.), the types of such acidulants, the amounts of antioxidants such as vitamin C (ascorbic acid), the amounts of raw materials, the type of an enzyme, the additive amount of the enzyme, the timing of adding the enzyme, the saccharification time in a preparation tank, the proteolysis time in the preparation tank, the pH in the preparation tank, the pH in a preparation step (a wort-producing step after addition of the malts and before addition of the yeast), the type of an acid (lactic acid, phosphoric acid, malic acid, tartaric acid, citric acid, etc.) used upon the pH adjustment, the additive amount of the acid used upon the pH adjustment, the timing of the pH adjustment (at the time of preparation, before filtration, after filtration, etc.), the preset temperature in each temperature range and retention time during preparation of wort (including the saccharification time), the concentration of the original extract of a wort, the concentration of the original extract before filtration, the concentration of the original extract after filtration, etc..

The total extract amount of the non-alcoholic beer-taste beverage according to one embodiment of the present invention is not particularly limited. From the viewpoint of achieving a beverage having a light taste, the total extract amount is preferably 1.5% by weight or less, more preferably 1.1% by weight or less, further preferably 0.80% by weight or less, and still further preferably less than 0.50% by weight.

It is to be noted that the "total extract amount" is used in the present description to mean an extract value (% by mass) that is obtained by measuring a degassed sample according to "Beer analysis method, 7.2 Extract" in "Revised Version Brewery Convention of Japan (BCOJ) Beer Analysis Method (published by the Brewing Society of Japan, and enlarged and revised in 2013)," edited by Brewers Association of Japan, Brewery Convention of Japan (BCOJ))."

The color of the non-alcoholic beer-taste beverage according to one embodiment of the present invention is not particularly limited. The non-alcoholic beer-taste beverage according to one embodiment of the present invention may have an amber or golden color, such as the colors of an ordinary beer, or may have a black color such as the color of a black beer, or may also be colorless and transparent. Otherwise, a desired color may be imparted to the beer-taste beverage by adding a coloring agent or the like thereto. The color of the beverage can be determined with the unaided eye, but it may also be determined using total light transmittance, chromaticity, etc.

The non-alcoholic beer-taste beverage according to one embodiment of the present invention may be configured to be filled in a container. Examples of the container may include bottles, plastic bottles, cans, and barrels. From the viewpoint of, in particular, the ease of carrying, cans, bottles and plastic bottles are preferable.

### 1.1 Raw materials

As main raw materials of the non-alcoholic beer-taste beverage according to one embodiment of the present invention, malts may be or may not be used together with water. In addition, hops may also be used, and further, a preservative, a sweetener, water-soluble dietary fibers, a bittering agent or a bitterness-imparting agent, an antioxidant, a flavor, an acidulant, salts, and the like may also be used.

When malts are used as raw materials, the malts mean those obtained by germinating the seeds of *mugi* plants such as barley, wheat, rye, wild oats, oats, adlay, or *Avena sativa,* then drying them, and then removing roots. The production area and variety of the used malts are not particularly limited.

In one embodiment of the present invention, the used malts are preferably barley malts. The barley malts are one type of malts that are most commonly used as raw materials of beer-taste beverages in Japan. Barley has several types such as two-row barley and six-row barley. All types of barley may be used. Further, in addition to common malts, colored malts and the like can also be used. When such colored malts are used, different types of colored malts may be appropriately used in combination, or only one type of colored malts may also be used.

Moreover, together with such malts, grains other than the malts, corn proteins, corn grits, yeast extracts, sugar solutions, and the like may also be used.

Examples of such grains may include *mugi* that does not correspond to malts (e.g. barley, wheat, rye, wild oats, oats, adlay, *Avena sativa,* etc.), rice (e.g. white rice, brown rice, etc.), corn, kaoliang, potato, beans (e.g. soybeans, garden peas, etc.), buckwheat, sorghum, foxtail millet, barnyard millet, starches obtained from these grains, and extracts thereof.

Besides, when malts are not used, a non-alcoholic beer-taste beverage, comprising liquid sugar containing a carbon source, and a nitrogen source serving as an amino acid-containing material (e.g. soybean proteins, etc.) of the aforementioned grains other than malts, may be applied.

Examples of the forms of hops used in one embodiment of the present invention may include pelletized hops, powdered hops, and hop extracts. In addition, the used hops may also be hop-processed products such as isomerized hops and reduced hops.

The additive amount of such hops is adjusted, as appropriate. The additive amount of the hops is preferably 0.0001 % to 1 % by mass, with respect to the total amount of the beverage.

Moreover, a non-alcoholic beer-taste beverage comprising hops as raw materials becomes a beverage containing an iso-alpha acid that is a component derived from the hops. The content of the iso-alpha acid in the non-alcoholic beer-taste beverage comprising hops may be more than 0.1 ppm by mass, and may also be more than 1.0 ppm by mass, based on the total amount (100% by mass) of the beer-taste beverage.

On the other hand, the content of the iso-alpha acid in a non-alcoholic beer-taste beverage that does not comprise hops may be 0.1 ppm by mass or less, based on the total amount (100% by mass) of the beer-taste beverage.

Besides, in the present description, the content of the iso-alpha acid means a value measured according to a high performance liquid chromatography (HPLC) analysis method described in "Revised Version Brewery Convention of Japan (BCOJ) Beer Analysis Method (published by the Brewing Society of Japan, edited by Brewers Association of Japan, Brewery Convention of Japan [Analysis Committee], and enlarged and revised in 2013)."

The non-alcoholic beer-taste beverage according to one embodiment of the present invention may be a beverage further comprising a preservative.

Examples of the preservative used in one embodiment of the present invention may include: benzoic acid; benzoates such as sodium benzoate; benzoic acid esters such as propyl parahydroxy-benzoate and butyl parahydroxy-benzoate; and dimethyl dicarbonate. Moreover, as such preservatives, commercially available preparations, such as Strong SANPRESER (manufactured by San-Ei Gen F.F.I., Inc.; a mixture of sodium benzoate and butyl benzoate), may also be used.

These preservatives may be used alone or may also be used in combination of two or more types.

When the non-alcoholic beer-taste beverage according to one embodiment of the present invention comprises a preservative, the mixed amount of such a preservative is preferably 5 to 1200 ppm by mass, more preferably 10 to 1100 ppm by mass, further preferably 15 to 1000 ppm by mass, and still further preferably 20 to 900 ppm by mass.

The non-alcoholic beer-taste beverage according to one embodiment of the present invention may also be a beverage further comprising a sweetener.

Examples of the sweetener may include commercially available saccharified solution obtained by decomposing grain-derived starch with an acid, an enzyme or the like, commercially available sugars such as starch syrup, sugar that is trisaccharide or more, sugar alcohol, natural sweeteners such as stevia, and artificial sweeteners.

These sweeteners may be used alone, or may also be used in combination of two or more types.

The form of these sugars may be either a liquid such as a solution, or a solid such as powders.

Moreover, the types of raw material grains for starch, the method of purifying starch, and treatment conditions, such as hydrolysis with an enzyme or an acid, are not particularly limited. For example, conditions for hydrolysis with an enzyme or an acid are determined, as appropriate, so that sugars in which the ratio of maltose is increased may be used. Furthermore, sucrose, fructose, glucose, maltose, trehalose, maltotriose, maltotetraose, isomaltose, isomalttriose, a solution thereof (i.e. a sugar solution), and the like can also be used. Further, starch syrup, isomerized sugar, and the like can also be used.

Still further, examples of the artificial sweetener may include aspartame, acesulfame potassium (acesulfame K), sucralose, and neotame.

The non-alcoholic beer-taste beverage according to one embodiment of the present invention may also be a beverage further comprising water-soluble dietary fibers.

Examples of the water-soluble dietary fibers may include indigestible dextrin, polydextrose, partially hydrolyzed guar gum, indigestible glucan, pectin, glucomannan, alginic acid, laminarin, fucoidin, and carrageenan. From the viewpoint of versatility such as stability and safety, indigestible dextrin or polydextrose is preferable.

These water-soluble dietary fibers may be used alone, or may also be used in combination of two or more types.

In the carbonated beverage according to one embodiment of the present invention, bitterness is preferably imparted with hops or a hop extract formed by isomerization of alpha acid. Together with such hops or such a hop extract formed by isomerization of alpha acid, the following bittering agents or bitterness-imparting agents may be used. Otherwise, the following bittering agents or bitterness-imparting agents may be used without using such hops and such a hop extract formed by isomerization of alpha acid.

Examples of the bittering agent or the bitterness-imparting agent may include *Ganoderma lucidum, Litchi chinensis, Carum carvim,* juniper fruit, sage, rosemary, reishi mushroom, laurel, quasin, citrus extract, *Picrasma quassioides* extract, coffee extract, tea extract, bitter melon extract, lotus germ extract, *Aloe arborescens* extract, *Ganoderma lucidum* extract, *Litchi chinensis* extract, laurel extract, sage extract, caraway extract, naringin, *Artemisia absinthium,* and *Artemisia absinthium* extract.

These bittering agents or bitterness-imparting agents may be used alone, or may also be used in combination of two or more types.

The non-alcoholic beer-taste beverage according to one embodiment of the present invention may also be a beverage further comprising an antioxidant.

The antioxidant is not particularly limited, and the substances used as antioxidants in an ordinary beer or a low-malt beer can be used. Examples thereof may include ascorbic acid, erythorbic acid, and catechin.

These antioxidants may be used alone, or may also be used in combination of two or more types.

The non-alcoholic beer-taste beverage according to one embodiment of the present invention may also be a beverage further comprising a flavor.

The flavor is not particularly limited, and a common beer flavor can be used. Such a beer flavor is used to add a beer-like flavor to beverages.

Examples of the beer flavor may include esters and higher alcohols. Specific examples of the beer flavor may include isoamyl acetate, ethyl acetate, n-propanol, isobutanol, acetaldehyde, ethyl caproate, ethyl caprylate, linalool, geraniol, citral, 4-vinylguaiacol (4-VG), 4-methyl-3-pentenoic acid, 2-methyl-2-pentenoic acid, 2,3-diethyl-5-methylpyrazine, γ-decanolactone, γ-undecalactone, ethyl hexanoate, ethyl 2-methylbutyrate, ethyl n-butyrate, and myrcene.

These flavors may be used alone, or may also be used in combination of two or more types.

The non-alcoholic beer-taste beverage according to one embodiment of the present invention may also be a beverage further comprising an acidulant.

The acidulant is not particularly limited, as long as it is a substance having a sourness. Examples of such an acidulant may include tartaric acid, phosphoric acid, citric acid, gluconic acid, lactic acid, malic acid, phytic acid, acetic acid, succinic acid, glucono delta lactone, and salts thereof.

Among these acidulants, at least one type selected from among tartaric acid, phosphoric acid, citric acid, gluconic acid, lactic acid, malic acid, phytic acid, acetic acid, succinic acid, and salts thereof, is preferable; at least one type selected from among tartaric acid, phosphoric acid, citric acid, lactic acid, acetic acid, and salts thereof, is more preferable; and at least one type selected from among tartaric acid, phosphoric acid, and lactic acid, is further preferable.

The acidulant used in one embodiment of the present invention is preferably a combination of tartaric acid, phosphoric acid, and lactic acid.

These acidulants may be used alone, or may also be used in combination of two or more types.

The non-alcoholic beer-taste beverage according to one embodiment of the present invention may also be a beverage further comprising salts.

Examples of such salts may include sodium chloride, potassium acid phosphate, calcium acid phosphate, ammonium phosphate, magnesium sulfate, calcium sulfate, potassium metabisulfite, calcium chloride, magnesium chloride, potassium nitrate, and ammonium sulfate.

These salts may be used alone, or may also be used in combination of two or more types.

The non-alcoholic beer-taste beverage according to one embodiment of the present invention may be a beverage that comprises an extract of one or more types of woods selected from beech, cedar, a cherry tree, an apple tree, and a walnut tree. Otherwise, the non-alcoholic beer-taste beverage according to one embodiment of the present invention may be a beverage that does not substantially comprise the aforementioned extract, or may also be a beverage that does not comprise the aforementioned extract.

The non-alcoholic beer-taste beverage according to one embodiment of the present invention may be a beverage comprising an extract of a plant belonging to the genus Quercus, the family Fagaceae. Otherwise, the non-alcoholic beer-taste beverage according to one embodiment of the present invention may be a beverage that does not substantially comprise the aforementioned extract, or may also be a beverage that does not comprise the aforementioned extract.

The non-alcoholic beer-taste beverage according to one embodiment of the present invention may be a beverage in which the content of Spilanthol is 0.1 ppb by mass or more, or may also be a beverage in which the content of Spilanthol is less than 0.1 ppb by mass.

### 1.2 Carbon dioxide gas

Carbon dioxide gas comprised in the non-alcoholic beer-taste beverage according to one embodiment of the present invention may be added by mixing the present non-alcoholic beer-taste beverage with carbonated water, or such carbon dioxide gas may be directly added to a raw material solution.

The concentration of carbon dioxide gas in the beer-taste beverage according to one embodiment of the present invention is preferably 0.30 (w/w)% or more, more preferably 0.35 (w/w)% or more, even more preferably 0.40 (w/w)% or more, further preferably 0.42 (w/w)% or more, still further preferably 0.45 (w/w)% or more, still further preferably 0.46 (w/w)% or more, still further preferably 0.47 (w/w)% or more, and particularly preferably 0.48 (w/w)% or more. On the other hand, the concentration of carbon dioxide gas in the beer-taste beverage according to one embodiment of the present invention is preferably 0.80 (w/w)% or less, more preferably 0.70 (w/w)% or less, even more preferably 0.65 (w/w)% or less, further preferably 0.60 (w/w)% or less, still further preferably 0.59 (w/w)% or less, still further preferably 0.58 (w/w)% or less, still further preferably 0.57 (w/w)% or less, still further preferably 0.56 (w/w)% or less, and particularly preferably 0.55 (w/w)% or less.

Besides, in the present description, the concentration of carbon dioxide gas can be measured by immersing a container, in which a beverage used as a target is placed, in a water tank at 20°C for 30 minutes or more, while sometimes shaking the container, so that the temperature of the beverage is adjusted to be 20°C, and then measuring the concentration using a gas volume measuring device (for example, GVA-500 (manufactured by KYOTO ELECTRONICS MANUFACTURING CO., LTD.), etc.).

When the beer-taste beverage according to one embodiment of the present invention is a container-packed beverage, the carbon dioxide gas pressure of the container-packed beverage may be adjusted, as appropriate, in a range in which the concentration of the carbon dioxide gas becomes in the above-described concentration range. The carbon dioxide gas pressure of the container-packed beverage may be 5.0 kg/cm² or less, 4.5 kg/cm² or less, or 4.0 kg/cm² or less. On the other hand, it may also be 0.20 kg/cm² or more, 0.50 kg/cm² or more, or 1.0 kg/cm² or more. Besides, these upper limits and lower limits may be combined with one another in any ways, and for example, the carbon dioxide gas pressure of the beverage may be 0.20 kg/cm² or more and 5.0 kg/cm² or less, 0.50 kg/cm² or more and 4.5 kg/cm² or less, or, 1.0 kg/cm² or more and 4.0 kg/cm² or less.

In the present description, the gas pressure means a gas pressure in a container, unless otherwise specified.

The pressure can be measured by a method well known to those skilled in the art, and for example, the pressure can be measured by applying a method comprising fixing a sample set at 20°C in a gas pressure gauge, then once opening the stopper cock of the gas pressure gauge to discharge gas, then closing the stopper cock again, then shaking the gas pressure gauge, and then reading the value when the indicator reaches a predetermined position, or by using a commercially available gas pressure measurement device.

### 1.3 Other additives

The non-alcoholic beer-taste beverage according to one embodiment of the present invention may comprise various additives, as necessary, in a range in which the additives do not impair the effects of the present invention.

Examples of such additives may include coloring agents, foaming agents, fermentation promoters, yeast extracts, protein substances such as peptide-containing matters, and condiments such as amino acids.

The coloring agent is used to impart a beer-like color to the beverage, and a caramel coloring or the like can be used. The foaming agent is used to form beer-like foams or to retain the foams of the beverage. Examples of the foaming agent that can be appropriately used herein may include: plant-extracted saponin substances such as soybean saponin and quillaja saponin; vegetable proteins of corns, soybeans, and the like; peptide-containing matters such as collagen peptides; and yeast extracts.

The fermentation promoter is used to promote fermentation with yeasts. For example, yeast extracts, bran ingredients of rice, *mugi,* and the like, vitamins, and mineral agents can be used alone or in combination.

### 2. Method for producing non-alcoholic beer-taste beverage

The method for producing a non-alcoholic beer-taste beverage of the present invention is not particularly limited, and it is, for example, a method comprising the following Steps (1) to (3).
- Step (1): a step of performing at least one treatment of a saccharification treatment, a boiling treatment and a solid-removing treatment, using various types of raw materials, so as to obtain a pre-beverage solution.
- Step (2): a step of adding carbon dioxide gas to the pre-beverage solution.
- Step (3): a step of adjusting the content of 1,4-cineole (Y).

In addition, in the production method according to one embodiment of the present invention, the method may further comprise the following Step (4). - Step (4): a step of adjusting the content of isoamyl propionate (X).

The above-described individual steps will be described below.

### < Step (1) >

Step (1) is a step of performing at least one treatment of a saccharification treatment, a boiling treatment and a solid-removing treatment, using various types of raw materials, so as to obtain a pre-beverage solution.

For example, when malts are used as various types of raw materials, various types of raw materials including water and malts are added into a preparation pot or a preparation tank, and enzymes such as amylase are added, as necessary. Various types of raw materials other than the malts that may be added herein may include hops, dietary fibers, sweeteners, antioxidants, bitterness-imparting agents, flavors, acidulants, and pigments.

A mixture of various types of raw materials is heated, and starchy materials in the raw materials are saccharified, so as to carry out a saccharification treatment. The temperature and the time applied in the saccharification treatment are adjusted, as appropriate, depending on the types of malts used, the percentage of malts, raw materials other than water and malts, etc. Filtration is carried out after completion of the saccharification treatment, so as to obtain a saccharified solution.

Besides, this saccharified solution is preferably subjected to a boiling treatment.

When hops, bittering agents, etc. are used as raw materials, these substances are preferably added in this boiling treatment. The hops, bittering agents, etc. may be added at a timing between initiation of the boiling of the saccharified solution and before termination of the boiling.

After completion of the boiling treatment, the resultant is transferred into a whirlpool and is cooled to 0°C to 10°C so as to prepare a cooling solution. Thereafter, in order to remove solids such as coagulated proteins, a solid-removing treatment is preferably carried out. Thus, a pre-beverage solution is obtained.

Otherwise, instead of the above-described saccharified solution, hops, bittering agents, etc. may be added into a malt extract to which hot water has been added, and a boiling treatment may be then carried out, so as to prepare a pre-beverage solution.

On the other hand, when malts are not used as various types of raw materials, liquid sugar containing a carbon source, a nitrogen source serving as an amino acid-containing raw material other than *mugi* or malts, hops, dietary fibers, sweeteners, antioxidants, bitterness-imparting agents, flavors, acidulants, pigments, etc. may be mixed with hot water to prepare a liquid sugar solution, and a boiling treatment may be then carried out on the liquid sugar solution, thereby preparing a pre-beverage solution.

In the case of using hops, such hops may be added before performing the boiling treatment, or may also be added at the timing between initiation of the boiling of the liquid sugar solution and before termination of the boiling.

Besides, after completion of the Step (1), a fermentation step using a yeast (a top fermentation yeast or a bottom fermentation yeast) is carried out, and thereafter, a step of performing a treatment of removing alcohol generated in the fermentation step, so as to obtain a fermented beverage having an alcohol percentage of less than 1 (v/v)% (preferably less than 0.5 (v/v)%, more preferably less than 0.1 (v/v)%, further preferably less than 0.01 (v/v)%, and still further preferably less than 0.005 (v/v)%), is carried out, so that a non-alcoholic beer-taste beverage may be produced.

On the other hand, the production method according to one embodiment of the present invention may also be a method, in which the above-described fermentation step and step of removing alcohol are not carried out.

### < Step (2) >

Step (2) is a step of adding carbon dioxide gas to the above-described pre-beverage solution.

As a method of adding carbon dioxide gas, a known method applied upon the production of a carbonated beverage can be used. For example, carbon dioxide gas may be added by the admixture of the pre-beverage solution obtained in Step (1) with carbonated water, or such carbon dioxide gas may be directly added to the pre-beverage solution. Using such a known method, it is preferable to adjust the carbon dioxide gas pressure to be in the aforementioned range.

### < Step (3) and Step (4) >

Step (3) is a step of adjusting the content of 1,4-cineole (Y), and Step 4 is a step of adjusting the content of isoamyl propionate (X).

Step (3) and Step (4) may be carried out at any timing of, before or after the saccharification treatment, before or after the boiling treatment, and before or after the solid-removing treatment, which are performed in Step (1), or may also be carried out before or after Step (2) performed after completion of the Step (1). However, from the viewpoint of precisely adjusting the contents of these components in the finally produced beverage, Step (3) and Step (4) are preferably carried out after completion of Step (1) and before initiation of Step (2).

Besides, the order of performing Step (3) and Step (4) is not particularly limited, and either step may be performed first.

In Step (3), 1,4-cineole is added to the beverage before adjustment, so that the content of 1,4-cineole (Y) may be adjusted. Otherwise, the content of 1,4-cineole (Y) in the beverage before adjustment is measured, and based on the measured value, isoamyl propionate is added, or water is added to the beverage to dilute it, so that the content of 1,4-cineole (Y) may be adjusted in the aforementioned range. Besides, when the content (Y) has already been in a desired range, the operation of adding 1,4-cineole or adding water to the beverage to dilute it according to the present step is unnecessary.

Further, as with Step (3), even in Step (4), isoamyl propionate is added to the beverage before adjustment, so that the content of isoamyl propionate (X) may be adjusted. Otherwise, the content of isoamyl propionate (X) in the beverage before adjustment is measured, and based on the measured value, isoamyl propionate is added, or water is added to the beverage to dilute it, so that the content of isoamyl propionate (X) may be adjusted in the aforementioned range. Besides, when the content (X) has already been in a desired range because of the presence of isoamyl propionate derived from the raw materials in the beverage before adjustment, the operation of adding isoamyl propionate or adding water to the beverage to dilute it according to the present step is unnecessary.

After completion of these steps, the steps performed in the production of non-alcoholic beer-taste beverages that are well known to those skilled in the art, such as a liquor storage step and a filtration step, may be carried out.

The thus obtained non-alcoholic beer-taste beverage according to one embodiment of the present invention is filled in a predetermined container, and is distributed as a product to the market.

The method of filling the beverage in a container is not particularly limited, and a method of filling a beverage in a container that is well known to those skilled in the art can be applied. By performing a step of filling the beverage in a container, the non-alcoholic beer-taste beverage of the present invention is filled and hermetically sealed in the container. In such a step of filling the beverage in a container, containers having any forms and/or being made of any materials may be used, and examples of such a container are as described above.

### Examples

Hereinafter, the present invention will be described in more detail in the following Examples. However, these examples are not intended to limit the scope of the present invention.

### [Examples 1 to 12 and Comparative Examples 1 to 3]

Water, malts and hops were used as raw materials, and these raw materials were subjected to a saccharification treatment to obtain a wort. A fermentation step using a yeast was not performed on the obtained wort, and 1,4-cineole and isoamyl propionate were added to the wort, and carbon dioxide gas was also added to the wort, so that the contents shown in Tables 1 to 4 could be obtained, thereby preparing non-alcoholic beer-taste beverages each having a carbon dioxide gas pressure of 2.3 kg/cm², a pH value of less than 4.0, and an alcohol percentage of 0.0 (v/v)%. Besides, in Examples 1 to 4, the non-alcoholic beer-taste beverages were prepared without adding isoamyl propionate; in Comparative Example 1, the non-alcoholic beer-taste beverage was prepared without adding 1,4-cineole and isoamyl propionate; and in Comparative Example 2, the non-alcoholic beer-taste beverage was prepared without adding 1,4-cineole.

Thereafter, 6 panelists who had been trained on a daily basis performed a sensory evaluation on the obtained non-alcoholic beer-taste beverages, with regard to "the feeling of a beverage going down the throat, which is suitable for a beer-taste beverage," "the satisfying quality of a beverage, which is suitable for a beer-taste beverage," and "the presence or absence of a bitterness as an unsuitable aftertaste of a beer-taste beverage," based on the following score criteria, with scores in 0.5 steps in the range of 3.0 (maximum value) to 1.0 (minimum value). For the evaluation, samples compatible with the following criteria "3.0," "2.5," "2.0," "1.5" and "1,0" had previously been prepared, and thus, the standards among individual panelists were intended to be unified. Besides, in all of the sensory evaluations shown in Tables 1 to 3, a score value difference of 1.5 or more was not found among individual panelists, with respect to an identical beverage. Tables 1 to 4 show the mean values of the scores given by individual panelists.
[Score criteria for feeling of beverage going down throat, which is suitable for beer-taste beverage]
   - "3.0": Favorable feeling of a beverage going down the throat, which is suitable for a beer-taste beverage, is strongly felt.
   - "2.5": Favorable feeling of a beverage going down the throat, which is suitable for a beer-taste beverage, is clearly felt.
   - "2.0": Favorable feeling of a beverage going down the throat, which is suitable for a beer-taste beverage, is felt to a certain extent.
   - "1.5": Favorable feeling of a beverage going down the throat, which is suitable for a beer-taste beverage, is not felt so much.
   - "1.0": Feeling of a beverage going down the throat, which is suitable for a beer-taste beverage, is not felt.
[Score criteria for satisfying quality of beverage, which is suitable for beer-taste beverage]
   - "3.0": Favorable satisfying quality of a beverage, which is suitable for a beer-taste beverage, is strongly felt.
   - "2.5": Favorable satisfying quality of a beverage, which is suitable for a beer-taste beverage, is clearly felt.
   - "2.0": Favorable satisfying quality of a beverage, which is suitable for a beer-taste beverage, is felt to a certain extent.
   - "1.5": Favorable satisfying quality of a beverage, which is suitable for a beer-taste beverage, is not felt so much.
   - "1.0": Favorable satisfying quality of a beverage, which is suitable for a beer-taste beverage, is not felt.
[Score criteria for presence or absence of bitterness as unsuitable aftertaste of beer-taste beverage]
   - "3.0": Bitterness as an unsuitable aftertaste is not felt at all.
   - "2.5": Bitterness as an unsuitable aftertaste is hardly felt.
   - "2.0": Bitterness as an unsuitable aftertaste is slightly felt.
   - "1.5": Bitterness as an unsuitable aftertaste is clearly felt.
   - "1.0": Bitterness as an unsuitable aftertaste is strongly felt.

Moreover, from the mean values of the scores of the above-described 3 sensory evaluation items given by individual panelists, individual beer-taste beverages were subjected to comprehensive evaluation according to the following evaluation criteria. The results are as shown in Tables 1 to 3.

### [Comprehensive evaluation]

- "A": The mean values of the scores of the 2 sensory evaluation items, namely, "the feeling of a beverage going down the throat, which is suitable for a beer-taste beverage" and "the satisfying quality of a beverage, which is suitable for a beer-taste beverage" are both 2.0 or more, and the mean value of the scores of the sensory evaluation item, "the presence or absence of a bitterness as an unsuitable aftertaste of a beer-taste beverage," given by individual panelists is 2.5 or more.
- "B": At least one of the mean values of the scores of the 2 sensory evaluation items, namely, "the feeling of a beverage going down the throat, which is suitable for a beer-taste beverage" and "the satisfying quality of a beverage, which is suitable for a beer-taste beverage" is less than 2.0, and/or the mean value of the scores of the sensory evaluation item, "the presence or absence of a bitterness as an unsuitable aftertaste of a beer-taste beverage," given by individual panelists is less than 2.5.

### [Table 1]

**Table 1**

| | | | Ex. 1 | Ex. 2 | Ex. 3 | Ex. 4 | Comp. Ex. 1 |
|---|---|---|---|---|---|---|---|
| Content of isoamyl propionate (X) | | ppb by mass | 0 | 0 | 0 | 0 | 0 |
| Content of 1,4-cineole (Y) | | ppb by mass | 2.5 | 20 | 100 | 1000 | 0 |
| (X) (ppb by mass) / (Y) (ppb by mass) | | - | 0.000 | 0.000 | 0.000 | 0.000 | - |
| Sensory evaluation | Feeling of beverage going down throat, which is suitable for beer-taste beverage | | 2.0 | 2.0 | 2.0 | 2.0 | 1.5 |
| | Satisfying quality of beverage, which is suitable for beer-taste beverage | | 2.0 | 3.0 | 3.0 | 3.0 | 1.5 |
| | Presence or absence of bitterness as aftertaste unsuitable for beer-taste beverage | | 3.0 | 3.0 | 3.0 | 2.5 | 3.0 |
| | Comprehensive evaluation | | A | A | A | A | B |

### [Table 2]

**Table 2**

| | | | Ex. 5 | Ex. 6 | Ex. 7 | Ex. 8 | Comp. Ex. 2 |
|---|---|---|---|---|---|---|---|
| Content of isoamyl propionate (X) | | ppb by mass | 10 | 10 | 10 | 10 | 10 |
| Content of 1,4-cineole (Y) | | ppb by mass | 2.5 | 20 | 100 | 1000 | 0 |
| (X) (ppb by mass) / (Y) (ppb by mass) | | - | 4 | 0.500 | 0.100 | 0.010 | 0.000 |
| Sensory evaluation | Feeling of beverage going down throat, which is suitable for beer-taste beverage | | 2.5 | 2.5 | 2.5 | 2.5 | 2.0 |
| | Satisfying quality of beverage, which is suitable for beer-taste beverage | | 2.0 | 3.0 | 3.0 | 3.0 | 1.5 |
| | Presence or absence of bitterness as aftertaste unsuitable for beer-taste beverage | | 3.0 | 3.0 | 3.0 | 2.5 | 3.0 |
| | Comprehensive evaluation | | A | A | A | A | B |

### [Table 3]

**Table 3**

| | | | Ex. 9 | Ex. 10 | Ex. 11 | Ex. 12 |
|---|---|---|---|---|---|---|
| Content of isoamyl propionate (X) | | ppb by mass | 400 | 400 | 400 | 400 |
| Content of 1,4-cineole (Y) | | ppb by mass | 2.5 | 20 | 100 | 1000 |
| (X) (ppb by mass) / (Y) (ppb by mass) | | - | 160 | 20 | 4 | 0.400 |
| Sensory evaluation | Feeling of beverage going down throat, which is suitable for beer-taste beverage | | 3.0 | 3.0 | 3.0 | 3.0 |
| | Satisfying quality of beverage, which is suitable for beer-taste beverage | | 2.0 | 3.0 | 3.0 | 3.0 |
| | Presence or absence of bitterness as aftertaste unsuitable for beer-taste beverage | | 3.0 | 3.0 | 3.0 | 2.5 |
| | Comprehensive evaluation | | A | A | A | A |

### [Table 4]

**Table 4**

| | | | Ex. 13 | Ex. 14 | Ex. 15 | Ex. 16 | Comp. Ex. 3 |
|---|---|---|---|---|---|---|---|
| Content of isoamyl propionate (X) | | ppb by mass | 1000 | 1000 | 1000 | 1000 | 2000 |
| Content of 1,4-cineole (Y) | | ppb by mass | 2.5 | 20 | 100 | 1000 | 1500 |
| (X) (ppb by mass) / (Y) (ppb by mass) | | - | 400 | 50 | 10 | 1 | 1.333 |
| Sensory evaluation | Feeling of beverage going down throat, which is suitable for beer-taste beverage | | 2.5 | 2.5 | 2.5 | 2.5 | 2.5 |
| | Satisfying quality of beverage, which is suitable for beer-taste beverage | | 2.0 | 3.0 | 3.0 | 3.0 | 3.0 |
| | Presence or absence of bitterness at aftertaste unsuitable for beer-taste beverage | | 2.5 | 2.5 | 2.5 | 2.5 | 2.0 |
| | Comprehensive evaluation | | A | A | A | A | B |

As shown in Tables 1 to 4, the non-alcoholic beer-taste beverages of Examples 1 to 12 resulted to have a favorable feeling of a beverage going down the throat, which is suitable for a beer-taste beverage, and a favorable satisfying quality of a beverage, which is suitable for a beer-taste beverage, and also resulted to have a suppressed bitterness as an unsuitable aftertaste. In contrast, the non-alcoholic beer-taste beverages of Comparative Example 1 and Comparative Example 2 were beverages, from which a favorable feeling of a beverage going down the throat, which is suitable for a beer-taste beverage, and a favorable satisfying quality of a beverage, which is suitable for a beer-taste beverage, were not felt. In addition, the non-alcoholic beer-taste beverage of Comparative Example 3 was a beverage, from which a bitterness as an unsuitable aftertaste of a beer-taste beverage was felt.

## Claims

1. A non-alcoholic beer-taste beverage comprising 1,4-cineole, in which the content of 1,4-cineole (Y) is 1400 ppb by mass or less.

2. The non-alcoholic beer-taste beverage according to claim 1, further comprising isoamyl propionate.

3. The non-alcoholic beer-taste beverage according to claim 2, wherein the content of isoamyl propionate (X) is 1900 ppb by mass or less.

4. The non-alcoholic beer-taste beverage according to claim 2 or 3, wherein the ratio [(X)/(Y)] between the content of 1,4-cineole (Y) (unit: ppb by mass) and the content of isoamyl propionate (X) (unit: ppb by mass) is 0.0007 to 1200.

5. The non-alcoholic beer-taste beverage according to any one of claims 1 to 4, wherein the content of 1,8-cineole is 100 ppb by mass or less.

6. The non-alcoholic beer-taste beverage according to any one of claims 1 to 5, which does not substantially comprise 1,8-cineole.

7. The non-alcoholic beer-taste beverage according to any one of claims 1 to 6, wherein the alcohol percentage in the non-alcoholic beer-taste beverage is less than 1.0 (v/v)%.

8. The non-alcoholic beer-taste beverage according to any one of claims 1 to 7, wherein the carbon dioxide gas pressure in the non-alcoholic beer-taste beverage is 5.0 kg/cm² or less.

9. The non-alcoholic beer-taste beverage according to any one of claims 1 to 8, which is a non-fermented beverage.
